# EUROPEAN PATENT APPLICATION

(11) **EP 4 378 323 A2**
(43) Date of publication of application: **05.06.2024**
(21) Application number: 24170412.1
(22) Date of filing: 03.02.2022
(51) Int. Cl.: A23L 27/00

(54) **SALTINESS-PERCEPTION ENHANCING COMPOUNDS**

(30) Priority: 05.02.2021 US 202117168464
(62) Divisional of application: 22710776.0
(71) Applicant: Frito-Lay North America, Inc., Plano, TX 75024 (US)
(72) Inventor: ANDERSON, Nickolas, Arden Hills, 55112 (US); PETERSON, Devin, Arlington, 43221 (US); PETERSON, Julie, Arlington, 43221 (US); SCHWARTZ, Eric, Columbus, 43206 (US)
(74) Representative: McNamara, Kathryn

(57) **Abstract**

A seasoning composition having enhanced salt intensity includes a salt component and a sodium-free saltiness-perception enhancing compound. The saltiness-perception enhancing compound includes kukoamine A. The seasoning composition exhibits a mean saltiness intensity that is about the same as a second seasoning compound that has an amount of the salt component that is greater than the salt component in the seasoning composition and that does not contain the saltiness-perception enhancing compound. A seasoned food product may include a food product and the sodium-free saltiness-perception enhancing compound. The sodium-free saltiness-perception enhancing compound may be used in a method of reducing sodium intake and a method of enhancing the salt taste of a food product. The sodium-free saltiness-perception enhancing compound may be derived from *Solanum tuberosum.*

## Description

### CROSS - REFERENCE TO RELATED APPLICATION

This application claims priority to U.S. Application No. Serial No. 17/168,464, filed on February 5, 2021, which is incorporated herein by reference in its entirety.

### TECHNICAL FIELD

Seasoning compositions including a salt component and a sodium-free saltiness-perception enhancing compound, seasoned food products including such compositions, and methods of producing and using such compositions are described. The sodium-free saltiness-perception enhancing compound may be gentisic acid 5-*O*-β-D xylopyranoside and/or kukoamine A.

### BACKGROUND

Food technology that reduces the current utilization of dietary sodium in food production has the potential to reduce the incidence of health issues associated with high sodium intake and has important applications in the food and beverage industry. Globally, dietary risks were responsible for 11 million deaths in 2017, with the greatest proportion of diet-related deaths being attributable to high intake of sodium. Thus, there is a demand for the food and beverage industry to develop food products having lower sodium levels without compromising on the salt taste that meets consumer expectations. In addition, natural flavoring agents (e.g., those existing in nature) are preferred over artificial flavoring agents by some consumers and can simplify food labeling. However, known salt substitutes may not be considered natural flavoring agents and are associated with low saltiness intensity and off-flavors. Accordingly, there is a need for natural compounds that enhance the perceived saltiness of a food product without adding sodium or off-flavors to the food product.

### SUMMARY

According to one aspect of this disclosure, a seasoning composition having enhanced salt intensity includes a salt component and a sodium-free saltiness-perception enhancing compound (also referred to as the saltiness-perception enhancing compound). The sodium-free saltiness-perception enhancing compound includes at least one of gentisic acid 5-*O*-β-D xylopyranoside or kukoamine A. The seasoning composition exhibits a mean saltiness intensity that is about the same as a second seasoning compound that has an amount of the salt component that is greater than the salt component in the seasoning composition and that does not contain the saltiness-perception enhancing compound.

The second seasoning compound may have an amount of the salt component that is from about 5 wt% to about 67 wt% greater than the salt component in the seasoning composition of this embodiment. For example, the second seasoning compound may have an amount of the salt component that is from about 10 wt% to about 50 wt% greater than the salt component in the seasoning composition, or from about 15 wt% to about 30 wt% greater than the salt component in the seasoning composition, or from about 20 wt% to about 30 wt% greater than the salt component in the seasoning composition. In some examples, the second seasoning compound may have an amount of the salt component that is about 20 wt% greater than the salt component in the seasoning composition. The seasoning composition may include, by weight, from about 96.9941 % to about 99.9965% of the salt component and from about 0.0035% to 3.70% of the saltiness-perception enhancing compound. For example, the seasoning composition may include, by weight, from about 99.11% to about 99.9625% of the salt component and from about 0.0375% to 0.89% of the saltiness-perception enhancing compound, or from about 99.87% to about 99.9555% of the salt component and from about 0.0445% to 0.13% of the saltiness-perception enhancing compound. In another example, the seasoning composition may include, by weight, from about 96.4% to about 97.34% of the salt component and from about 2.66% to 3.70% of the saltiness-perception enhancing compound.

The salt component may comprise any salt fit for human consumption, and may include sodium chloride, or "salt", natural sea salts or sea salt blends, alone or in various combinations with potassium chloride.

The sodium-free saltiness-perception enhancing compound may be derived from any suitable natural or plant-based source and may be produced in any suitable manner. In one embodiment. For example, the saltiness-perception enhancing compound may be derived from a plant that includes a modified level of the saltiness-perception enhancing compound relative to a wild-type individual of the same taxon. Suitable plants include, but are not limited to members of the Solanaceae family. In one embodiment the saltiness-perception enhancing compound is derived from *Solanum tuberosum*, such as from an individual of the species *Solanum tuberosum* that includes a modified level of the saltiness-perception enhancing compound relative to a wild-type individual of the same taxon.

According to another aspect, a seasoned food product includes a food product and a seasoning composition that includes the sodium-free saltiness-perception enhancing compound such that the seasoning composition enhances a salt intensity of the seasoned food product. The food product may be any edible food product. In some embodiments, the food product may be a solid food or a liquid food, such as a soup or other liquid food product. In some embodiments, the food product may be a ready to eat snack food product. The snack food product can be any snack food product known in the art, such as tortilla chips, potato chips, corn chips, extruded snacks, pretzels, crispy breads, popcorn, nuts, or nut clusters. In one embodiment, the food substrate is a shelf-stable ready-to-eat snack food with a moisture content of less than about 3% by weight. In one aspect, the snack food product is derived from potatoes.

The seasoned food product may exhibit a mean saltiness intensity that is about the same as a second seasoned food product that has an amount of the salt component that is greater than the salt component in the seasoning composition and that does not contain the saltiness-perception enhancing compound.

According to another aspect, a method of producing a seasoning composition is disclosed. The method includes mixing a salt component with the sodium-free saltiness-perception enhancing compound.

According to another aspect, a method of reducing sodium intake is disclosed. The method includes providing a composition that includes a food product, a salt component, and a sodium-free saltiness-perception enhancing compound that includes the at least one of gentisic acid 5-*O*-β-D xylopyranoside or kukoamine A. The saltiness-perception enhancing compound enhances the salt taste of the food product.

In such embodiments, a quantity of the food product may include about 5 wt% to about 40 wt% less sodium chloride (NaCl) than an equal quantity of a conventional food product of the same type. For example, the food product may include about 20 wt% to about 30 wt% less sodium chloride than the equal quantity of a conventional food product of the same type. In some examples, the food product may include about 20 wt% less sodium chloride than the equal quantity of a conventional food product of the same type. The quantity of the food product may exhibit a mean saltiness intensity that is about the same as the equal quantity of the conventional food product of the same type.

According to another aspect, a seasoning composition providing enhanced salt intensity to a food product is disclosed. The seasoning composition includes at least one of gentisic acid 5-*O*-β-D xylopyranoside or kukoamine A and exhibits a mean saltiness intensity that is greater than a second seasoning compound that has an amount of the salt component that is the same as the salt component in the seasoning composition and that does not contain the saltiness-perception enhancing compound.

The disclosure extends to methods, systems, kits of parts and apparatus substantially as described herein and/or as illustrated with reference to the accompanying figures.

The disclosure extends to any novel aspects or features described and/or illustrated herein. In addition, apparatus aspects may be applied to method aspects, and vice versa. Furthermore, any, some and/or all features in one aspect can be applied to any, some and/or all features in any other aspect, in any appropriate combination.

It should also be appreciated that particular combinations of the various features described and defined in any aspects of the disclosure can be implemented and/or supplied and/or used independently.

Unless otherwise explicitly noted, all percentages in the disclosure refer to a percent by weight.

### BRIEF DESCRIPTION OF THE DRAWINGS

The following description accompanies the drawings, all given by way of non-limiting examples that may be useful to understand how the described process and system may be embodied. In addition, the drawings and elements shown in the drawings are not necessarily or intended to be to scale.
Fig. 1 shows an exemplary fractionation workflow for identifying compounds that enhance saltiness perception.
Fig. 2 shows a first dimension LC fractionation chromatogram divided into sixteen fractions, resulting from a first dimension of a multi-dimensional sensory-guided fractionation, and mean sensory ratings of saltiness enhancement for each fraction.
Fig. 3 shows the LC fractionation chromatogram of one of the sixteen fractions of Fig. 2, resulting from a second dimension of the multi-dimensional sensory-guided fractionation.
Fig. 4 shows the variation in the concentration of gentisic acid 5-*O*-β-D xylopyranoside present in four varieties of potato.

### DESCRIPTION

Seasoning compositions including a salt component and a sodium-free saltiness-perception enhancing compound that includes gentisic acid 5-*O*-β-D xylopyranoside and/or kukoamine A, seasoned food products including such compositions, and methods of producing and using such compositions are described. In some embodiments, the sodium-free saltiness-perception enhancing compounds may be derived from *Solanum tuberosum* and may be applied, with a salt component, to food products to eliminate or attenuate the reduction in saltiness that would otherwise accompany a reduction in the amount of the salt component applied to the food product. In this manner, the seasoning compositions, seasoned food products, and methods of the present disclosure enable the development of food products having lower sodium levels without compromising on the salt taste that meets consumer expectations.

The inventors found that gentisic acid 5-*O*-β-D xylopyranoside and kukoamine A, compounds endogenous to potatoes and some other species on which food products may be based (e.g., tomato or cucumber), have been shown to enhance the perception of saltiness when topically applied, alone or in combination with one another, to food products without adding sodium or off-flavors to the food product. Moreover, due to its natural occurrence some species on which food products may be based, gentisic acid 5-*O*-β-D xylopyranoside and kukoamine A may not necessarily need to be labeled when applied to food products based on such species, thereby facilitating simple food labels desired by consumers. However, endogenous levels of gentisic acid 5-*O*-β-D xylopyranoside and/or kukoamine A may be insufficient to significantly enhance the perception of saltiness of the substances from which the gentisic acid 5-*O*-β-D xylopyranoside and/or kukoamine A are derived.

### Definitions

The term "potato" refers to a member of the species *Solanum tuberosum.*

The term "natural" refers to a substance existing in nature.

The terms "saltiness," "saltiness intensity," and "mean saltiness intensity" may refer to the saltiness intensity of a compound, a composition, and/or a food product determined by an individual tasting a sample of the compound, the composition, and/or the food product and rating its saltiness intensity using a designated scale, such as the 15-point saltiness scale described herein.

### Seasoning Compositions

The described seasoning compositions can include a salt component and a sodium-free saltiness-perception enhancing compound. The salt component may comprise any salt fit for human consumption, and may include sodium chloride, or "salt", natural sea salts or sea salt blends, alone or in various combinations with potassium chloride.

The sodium-free saltiness-perception enhancing compound includes at least one of gentisic acid 5-*O*-β-D xylopyranoside or kukoamine A. In instances in which the saltiness-perception enhancing compound includes both gentisic acid 5-O-β-D xylopyranoside and kukoamine A, the gentisic acid 5-*O*-β-D xylopyranoside and kukoamine A may be combined in any suitable proportion. In general, a quantity (e.g., by weight) of gentisic acid 5-*O*-β-D xylopyranoside may provide a greater saltiness-enhancing effect than an equal quantity of kukoamine A.

The saltiness-perception enhancing compound may be derived from *Solanum tuberosum.* In such instances, the saltiness-perception enhancing compound may be derived from an individual of the species *Solanum tuberosum* that includes a modified level of the saltiness-perception enhancing compound relative to a wild-type individual of the same taxon. The modified (e.g., increased) level of the saltiness-perception enhancing compound in such an individual may be achieved via a breeding or genetic engineering strategy.

The seasoning composition may include, by weight, from about 99.941% to about 99.9965% of the salt component and from about 0.0035% to about 0.059% of the saltiness-perception enhancing compound. For example, a seasoning composition for topical application to a solid food may include, by weight, about 99.835% of the salt component and about 0.0165% of the saltiness-perception enhancing compound, or about 99.978% of the salt component and about 0.0218% of the saltiness-perception enhancing compound. In another example, a seasoning composition used in liquid foods may include, by weight, about 99.941% of the salt component and about 0.059% of the saltiness-perception enhancing compound.

The seasoning composition exhibits a mean saltiness intensity that is about the same as a second seasoning compound that has an amount of the salt component that is greater than the salt component in the seasoning composition and that does not contain the saltiness-perception enhancing compound. For example, the second seasoning compound may have an amount of the salt component that is from about 5 wt% to about 40 wt% greater than the salt component in the seasoning composition, such as about 20 wt% to about 30 wt% greater or about 20 wt% greater, while having a substantially similar mean saltiness intensity as the seasoning composition. The measurement of mean saltiness based on the 15-point saltiness scale will be described below.

The application of one or more of the saltiness-perception enhancing compounds to a food product, as part of a seasoning composition also including a salt component, may enable a reduction of up to about 40 wt% of the salt component applied to a food product while eliminating or attenuating the concomitant reduction in saltiness that would otherwise occur.

A seasoning composition providing enhanced salt intensity to a food product is also disclosed, in which the seasoning composition includes a salt component and the saltiness-perception enhancing compound. In such embodiments, the seasoning composition exhibits a mean saltiness intensity that is greater than a second seasoning compound that has an amount of the salt component that is the same as the salt component in the seasoning composition and that does not contain the saltiness-perception enhancing compound.

The seasoning composition may be applied to any edible food product, including, but not limited to, solid food products such as meat, poultry, fish, products derived from roots, tubers, fruits, vegetables, grains, and/or legumes. In this regard, meat, poultry, and fish products include those from any suitable animal or plant-based meat substitute. Other solid food products may include ready-to-eat snack food products. The snack food product can be any snack food product known in the art, such as tortilla chips, potato chips, corn chips, extruded snacks, pretzels, crispy breads, popcorn, nuts, nut clusters, seeds, crackers, cookies, and the like. Other solid food products may include cheese and cheese products, or other dairy products (e.g., butter), in a solid, semi-solid, or even liquid state. Still other solid food products may include, cereals, breads, pastas, muffins, bagels, and the like.

In one embodiment, the food substrate is a shelf-stable ready-to-eat snack food with a moisture content of less than about 3% by weight. In one aspect, the snack food product is derived from potatoes. Where the food product is based on species in which the saltiness-perception enhancing compound (i.e., gentisic acid 5-*O*-β-D xylopyranoside and/or kukoamine A) naturally occurs, such as potato, tomato, or cucumber, the saltiness-perception enhancing compound may not necessarily need be labeled, thereby facilitating simple food labels desired by consumers.

The seasoning composition may be applied to or included with a liquid food product. Liquid food products may include, but are not limited to, water, performance and flavored waters, sports drinks, carbonated flavor water such as soda pop, dairy and non-dairy beverages, juices, syrups, cocoa, tea, beer, other consumable beverages, and/ soups or other liquid food products.

### Seasoned Food Products

Seasoned food products are also disclosed. The seasoned food products include a food product and the seasoning composition described above. The food product may include any of the food products described above. The seasoned food product may exhibit a mean saltiness intensity that is about the same as a second seasoned food product that has an amount of the salt component that is greater than the salt component in the seasoning composition and that does not contain the saltiness-perception enhancing compound. In this manner, a quantity of the seasoned food product may include less of the salt component (e.g., by percent weight) than an equal quantity of a comparable seasoned food product that does not include the sodium-free saltiness-perception enhancing compound while providing a substantially similar salty taste.

### Methods of Producing and Using Sodium-Free Saltiness-Perception Enhancing Compounds

In some embodiments, the seasoning composition may be produced by mixing a salt component with the sodium-free saltiness-perception enhancing compound.

In other embodiments, the sodium-free saltiness-perception enhancing compound may be used to reduce sodium intake by a human or non-human animal. In such methods, the sodium-free saltiness-perception enhancing compound may be applied alone or in combination with a salt component to a food product.

A given quantity (e.g., by weight) of the food product provided in such methods may have a substantially similar salt taste as an equal quantity of a conventional food product of the same type that does not include the composition, while including about 5 wt% to 40 wt% less sodium chloride than the equal quantity of the conventional food product. More specifically, the quantity of the food product may have a substantially similar salt taste as the equal quantity of a conventional food product of the same type that does not include the composition, while including about 20 wt% to 30 wt% less sodium chloride than the equal quantity of the conventional food product, or, even more specifically, about 20 wt% less sodium chloride than the equal quantity of the conventional food product. Thus, the food product may be provided instead of the conventional food product to reduce an individual's sodium intake.

In still other embodiments, gentisic acid 5-*O*-β-D xylopyranoside and/or kukoamine A may be used to enhance the salt taste of a food product. In such methods, food product is provided and a composition that includes gentisic acid 5-*O-*β-D xylopyranoside and/or kukoamine A is added to the food product.

A given quantity (e.g., by weight) of the food product provided in such methods may have a substantially similar salt taste as an equal quantity of a conventional food product of the same type that does not include the composition, while including about 5 wt% to 40 wt% less sodium chloride than the equal quantity of the conventional food product. More specifically, the quantity of the food product may have a substantially similar salt taste as the equal quantity of a conventional food product of the same type that does not include the composition, while including about 20 wt% to 30 wt% less sodium chloride than the equal quantity of the conventional food product, or, even more specifically, about 20 wt% less sodium chloride than the equal quantity of the conventional food product. Thus, the food product may have an enhanced salt taste relative to a food product that has about 5 wt% to 40 wt% less sodium chloride than the conventional food product but does not include the saltiness-perception enhancing compound.

### Example Identification of Saltiness-Perception Enhancing Compounds in Potato and Potato Chips

The following description illustrates exemplary methods of (a) conducting sensory-guided liquid chromatography (LC) fractionation to identify compounds in potato and unsalted potato chips that enhance saltiness perception and (b) utilizing sensory recombination studies to validate the saltiness-perception enhancement provided by the identified compounds. The results of the exemplary methods described below indicate that the identified saltiness-enhancing compounds (i.e., gentisic acid 5-*O*-β-D xylopyranoside and kukoamine A), when applied to a food product alone or in combination, enable at least a 20% reduction in the amount of salt applied to a food product without a significant loss of saltiness intensity.

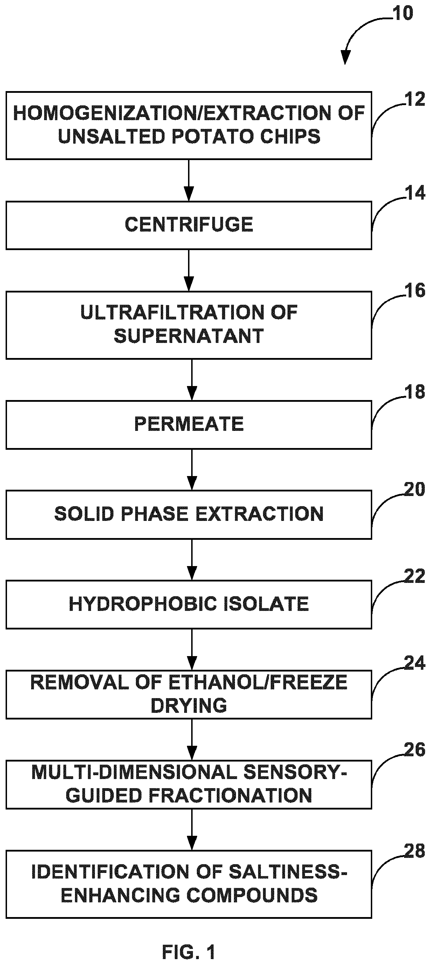

Fig. 1 shows a fractionation workflow 10 for the identification of compounds that enhance saltiness perception present in the unsalted potato chips. 200 g unsalted potato chips were homogenized and extracted in a 2 L volume of 30% EtOH and 70% H₂O for 12 hours (12). The extract was centrifuged for 15 minutes at 3200 rpm and the resulting supernatant collected (14). The supernatant was subjected to ultrafiltration through 3 kDa cutoff membranes (16) and the resulting permeate was collected (18). Ethanol was removed from the permeate and the permeate was freeze-dried (20). The freeze-dried permeate was subjected to solid phase extraction (22) to yield a hydrophobic isolate (24). Multi-dimensional sensory-guided fractionation was carried out (26), as further discussed below, and the saltiness-perception enhancing compounds were identified (28).

During the first dimension of the multi-dimensional sensory-guided fractionation, the methanolic isolate from Block 24 of Fig. 1 was subjected to preparative LCMS-QqQ Xevo TQD using a 5 µm, 50 mm x 50 mm XBridge C18 column, resulting in 16 fractions. Sodium and potassium quantification for each fraction was carried out and all fractions were adjusted to 60 mM Na (equivalent to 0.35% NaCl). The fractions were pH adjusted to pH ~6.6 to match the pH of the potato chips prior to sensory analysis. The fractions were then diluted to achieve the equivalent of 2 g of the unsalted potato chips in 1 mL of water.

Sensory analysis for fraction screening by human panelists was then conducted. Five panelists evaluated the fractions for saltiness intensity relative to a control of 0.35% NaCl in purified water while wearing nose clips. For each fraction, the panelists were presented with a sample of the fraction and a sample of the control. The panelists rated the saltiness enhancement of each fraction sample relative to the saltiness of the control sample on a five-point scale, with rating of zero corresponding to no difference in saltiness, a rating of one corresponding to a threshold difference (i.e., the fraction sample having greater saltiness than the control by a barely perceptible degree), a rating of two corresponding to a weak difference, a rating of three corresponding to a moderate difference, and a rating of four corresponding to a strong difference.

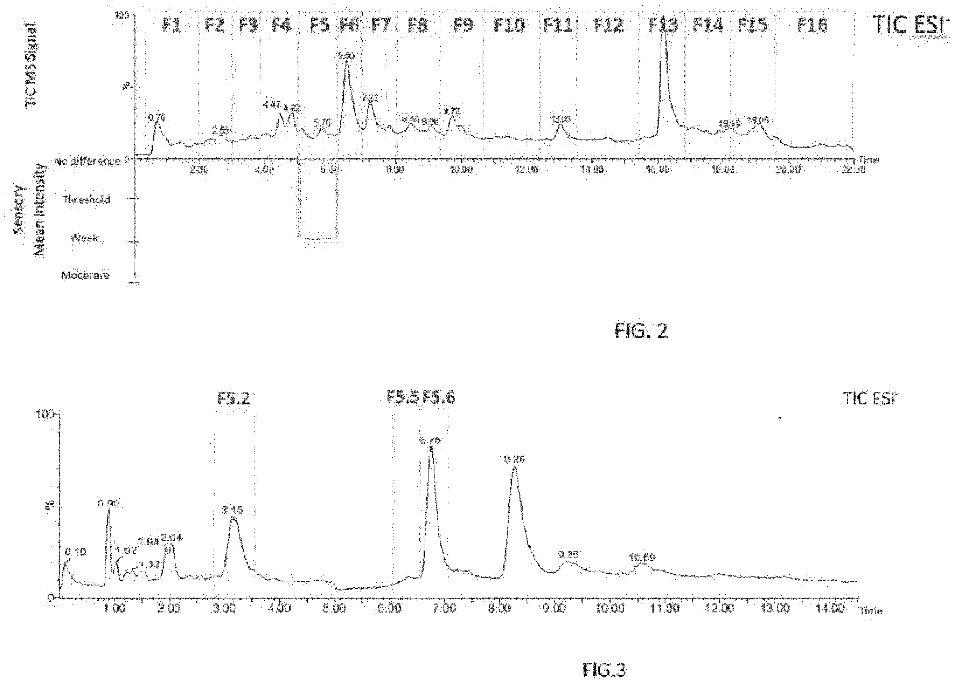

Fig. 2 shows the first dimension LC fractionation chromatogram resulting from the workflow of Fig. 1, divided into sixteen fractions F1-F16, and the mean sensory ratings of saltiness enhancement for each fraction relative to the control assigned by the panelists. As can be seen in Fig. 2, only fraction F5 was rated as having an enhanced saltiness (30) relative to the control. Fraction F5 thus was selected for second dimension LC fractionation and further analysis.

Fig. 3 shows the LC fractionation chromatogram of fraction F5 resulting from the second dimension of the multi-dimensional sensory-guided fractionation. Sub-fractions of fraction F5 were evaluated by panelists as described above, and three sub-fractions F5.2, F5.5, and F5.6 were identified as having an enhanced saltiness relative to the control. Using mass spectrometry and NMR analytical techniques, the saltiness-enhancing compounds corresponding to sub-fractions F5.2, F5.5, and F5.6 were quantified and identified as the following:

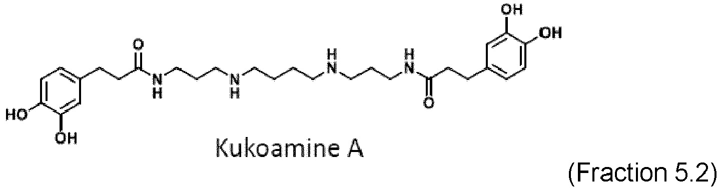

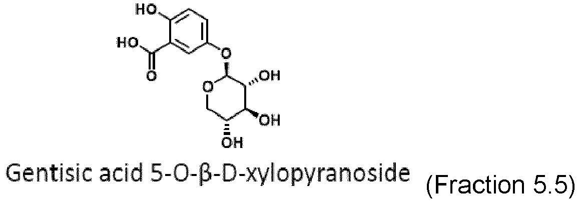

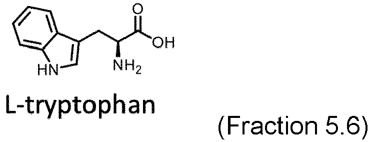

The concentrations of these saltiness-enhancing compounds present in the analyzed unsalted potato chips were determined as shown below in Table 1:

**Table 1**

| **Concentration of Saltiness Enhancing Compounds in Potato Chips** | |
|---|---|
| Compound | Mean ± SD (mg/kg) |
| Gentisic acid 5-*O*-β-D xylopyranoside | 0.44 ± 0.13 |
| Kukoamine A | 1.57 ± 0.31 |
| L-tryptophan | 31.66 ± 6.05 |

Gentisic acid 5-*O*-β-D xylopyranoside and kukoamine A were then isolated from potatoes and potato chips for use in further sensory analysis. Five kg of potatoes and three kg of potato chips were subjected to ultrafiltration and solid phase extraction substantially as discussed above with respect to Fig. 1. Multidimensional fractionation was carried out to yield gentisic acid 5-*O*-β-D xylopyranoside and kukoamine A at > 95% purity.

### Descriptive analysis of saltines intensity of samples containing the isolated compounds

Next, the panelists conducted descriptive analysis to evaluate the saltiness intensity of the following four sample sets.
(1) 2 mL samples of aqueous salt solutions with a 20% reduction in NaCl (3.52 g NaCl/L H₂O) and 40% reduction in NaCl (2.64 NaCl/L H₂O), relative to 2 mL of a control sample having a simulated saltiness intensity of traditional potato chips (4.40 g NaCl/L H₂O);
(2) 2 mL samples of pH 6.2-6.5 aqueous salt solutions at the 20% NaCl reduction level (3.52 g NaCl/L H₂O) with the addition of individual ones of the identified saltiness-enhancing compounds, where the compound dosage was at the endogenous level of the analyzed unsalted potato chips (1x) and at three times the endogenous level of the potato chips (3x);
(3) 1 g potato chip samples with 20% reduction in NaCl (12.3 g NaCl/kg) and 40% reductions in NaCl (9.2 g NaCl/kg), relative to traditional potato chips (15.4 g NaCl/kg); and
(4) 1 g potato chip samples at 20% and 40% salt reductions (relative to standard potato chips) with the addition of a mixture of the identified saltiness-enhancing compounds topically applied to potato chips at the endogenous level of the analyzed unsalted potato chips (1x).

Panelist evaluation of sample set (1): Twelve panelists rated saltiness intensity using a 15-point scale, in duplicate. The saltiness references provided were 0 points (water), 2.5 points (0.2% NaCl), 5 points (0.35% NaCl), and 8.5 points (0.5% NaCl). As shown below in Table 2, the panelists rated all aqueous samples as being significantly different from each other and rated both the 20% and 40% NaCl reduction-level samples as significantly less salty than the control.

**Table 2**

| Tukey HSD All-Pairwise Comparisons Sample Analysis | |
|---|---|
| Sample Composition (per L water) | Mean Saltiness Intensity¹ |
| 4.40 g NaCl | 7.2 A |
| 3.52 g NaCl; 20% reduced salt | 5.4 B |
| 2.64 g NaCl; 40% reduced salt | 4.4 C |

### Statistical Output

| | | | |
|---|---|---|---|
| Alpha | 0.05 | Standard Error for Comparison | 0.38 |
| Critical Q value | 3.49 | Critical Value for Comparison | 0.93 |

| | | | |
|---|---|---|---|
| ¹ samples with the same letter are not significantly different (Tukey HSD, α = 0.05) | | | |

Panelist evaluation of sample set (2): Eight panelists rated saltiness intensity using a 15-point scale, in duplicate. The saltiness references provided were 0 points (water), 2.5 points (0.2% NaCl), 5 points (0.35% NaCl), and 8.5 points (0.5% NaCl). The sensory dosage concentrations of the saltiness-enhancing compounds of the samples of sample set (2) is shown below in Table 3.

**Table 3**

| **Sensory Dosage Concentrations** | | |
|---|---|---|
| | Concentration (mg per L or Kg) | |
| Compound | 1x Dosage | 3x Dosage |
| Gentisic acid 5-*O*-β-D xylopyranoside | 0.44 | 1.32 |
| Kukoamine A | 1.57 | 4.70 |

As shown below in Table 4, gentisic acid 5-*O*-β-D xylopyranoside and kukoamine A provided significant saltiness enhancement at the 1x dosage level.

**Table 4**

| **Saltiness intensity of salt solutions as impacted by potato chip compounds** | |
|---|---|
| **Sample Composition (Per L Water)** | **Mean Saltiness Intensity¹** |
| | |

| *Gentisic acid xylopyranoside (GAX) samples:* | |
|---|---|
| 3.52 g NaCl + 0.44 mg GAX | 6.0 a |
| 3.52 g NaCl + 1.32 mg GAX | 5.4 ab |
| 3.52 g NaCl | 5.0 b |

| *Kukoamine A (KA) samples:* | |
|---|---|
| 3.52 g NaCl + 1.57 mg KA | 5.9 a |
| 3.52 g NaCl + 4.70 mg KA | 5.6 ab |
| 3.52 g NaCl | 5.1 b |
| | |

| *L-tryptophan (L-Trp) samples:* | |
|---|---|
| 3.52 g NaCl + 31.66 mg *L-Trp* | 5.7 a |
| 3.52 g NaCl + 94.98 mg *L-Trp* | 5.8 a |
| 3.52 g NaCl | 5.1 b |
| ¹ = samples within each sample set with the same letter are not significantly different (Tukey HSD, α =0.05) | |

Panelist evaluation of sample set (3): Twelve panelists rated saltiness intensity using a 15-point scale, in duplicate. The saltiness references provided were 0 points (water), 2.5 points (0.2% NaCl), 5 points (0.35% NaCl), and 8.5 points (0.5% NaCl). As shown below in Table 5, the panelists rated all aqueous samples as being significantly different from each other and rated both the 20% and 40% NaCl reduction-level samples as significantly less salty than the control.

**Table 5**

| Tukey HSD All-Pairwise Comparisons Sample Analysis | |
|---|---|
| Topical Coating Sample Composition (per Kg Potato Chips)¹ | Mean Saltiness Intensity¹ |
| 15.4 g NaCl | 6.1 A |
| 12.3 g NaCl; 20% reduced salt | 5.3 B |
| 9.2 g NaCl; 40% reduced salt | 4.2 C |

### Statistical Output

| | | | |
|---|---|---|---|
| | | Standard Error for Comparison | 0.28 |
| Alpha | 0.05 | | |
| Critical Q value | 3.58 | Critical Value for Comparison | 0.68 |

| | | | |
|---|---|---|---|
| ¹ samples with the same letter are not significantly different (Tukey HSD, α = 0.05) | | | |

Panelist evaluation of sample set (4): Nine panelists rated saltiness intensity using a 15-point scale, in duplicate. The saltiness references provided were 0 points (water), 2.5 points (0.2% NaCl), 5 points (0.35% NaCl), and 8.5 points (0.5% NaCl). As shown below in Table 6, gentisic acid 5-*O*-β-D xylopyranoside, kukoamine A and L-tryptophan were demonstrated to have salt-enhancing activity when applied topically to 20% and 40% salt reduced potato chips at the 1x dosage. Thus, application of one or more of the identified saltiness-perception enhancing compounds to a food product may enable a reduction of up to about 40 wt% of the amount of salt applied to a food product while eliminating or attenuating the concomitant reduction in saltiness that would otherwise occur.

**Table 6**

| **Saltiness intensity of salted potato chip samples impacted by potato chip compounds** | |
|---|---|
| **Topical Coating Sample Composition (Per Kg Potato Chips)¹** | **Mean Saltiness Intensity²** |
| | |

| *20% Salt reduction sample comparison:* | |
|---|---|
| 12.3 g NaCl + 0.44 mg GAX + 1.57 mg KA + 31.66 mg L-Trp | 6.6 a |
| 15.4 g NaCl (full salt) | 6.2 a |
| 12.3 g NaCl | 5.0 b |
| | |

| *40* % *Salt reduction sample comparison:* | |
|---|---|
| 15.4 g NaCl (full salt) | 6.2 a |
| 9.2 g NaCl + 0.44 mg GAX + 1.57 mg KA + 31.66 mg L-Trp | 4.9 b |
| 9.2 g/kg NaCl | 4.2 c |

| | |
|---|---|
| ¹ = *Gentisic acid 5-O-β-D xylopyranoside (GAX), Kukoamine A (KA), L-tryptophan (L-Trp)* ² = samples within each sample set with the same letter are not significantly different (Tukey HSD, α = 0.05) | |

### Example Determination of Quantitative Variation of Identified Saltiness-Perception Enhancing Compounds Across Different Varieties of Potato and Potato Chips

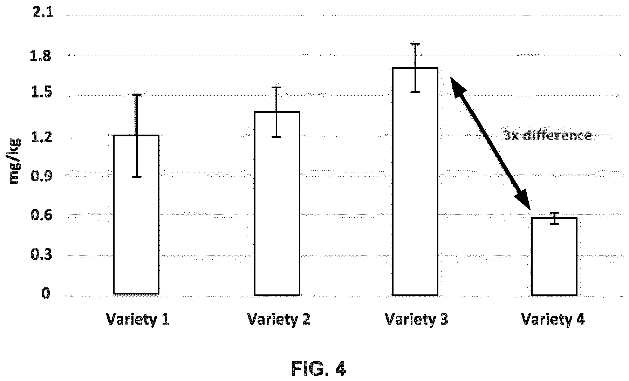

Four genetically different varieties of potato were analyzed and their respective concentrations of gentisic acid 5-*O*-β-D xylopyranoside determined. Fig. 4 shows the variation in the concentrations gentisic acid 5-*O*-β-D xylopyranoside present in the four varieties of potato. As shown in Fig. 4, the concentration of gentisic acid 5-*O*-β-D xylopyranoside present in potato variety #3 was determined to be about three times greater than the concentration of gentisic acid 5-*O*-β-D xylopyranoside present in potato variety #4.

### Technical PC Sample Evaluation Protocol and Results

### Panel training

All panelists participated in 3 sessions of salty intensity training utilizing a series of NaCl solutions. Ratings were made on a 15-point line scale anchored with 2.5 (0.2% NaCl), 5 (0.35% NaCl), and 8.5 (0.5% NaCl) references. For evaluation, 5 mL of solution was served in 1 oz cups labeled with 3-digit codes. Panelists were instructed to place the entire sample in their mouth and rate the maximum intensity perceived. During each training session, panelists evaluated aqueous samples with varying NaCl concentrations. Feedback calibration was utilized throughout the training, and extra samples were available to panelists to retaste as necessary. Panelists who were both accurate and reproducible moved on to the chip training. Panelists participated in 3 chip training sessions to familiarize themselves with the full salt sample and the chip evaluation protocol. In an introductory session, the full salt chip sample was presented to panelists alongside the NaCl solution references. A previous FREC panel rated the full salt chip an intensity of 6, and this was deemed appropriate by this panel. The full salt chip was used as a chip reference 6 throughout the panel. During each training session, panelists evaluated crushed chip samples with varying levels of NaCl concentrations following the protocol described below. Feedback calibration was utilized throughout chip training, and extra samples were available to the panel to retaste as necessary.

### Sample Evaluation

Nine trained panelists (3 males and 6 females, aged 22-44 years) rated the saltiness of the crushed potato chip samples. The samples were as follows: full salt control, 20% reduced salt, 40% reduced salt, 20% reduced salt + enhancing compounds, 40% reduced salt + enhancing compounds. Two g of the crushed chip samples were placed in 1 oz cups and labeled with 3-digit codes. Panelists were instructed to place the entire sample in their mouth and chew for 10 seconds or until the chip has been completed masticated (paste-like), then rate the maximum salty intensity perceived. Ratings were made on a 15-point line scale anchored with 2.5 (0.2% NaCl), 5 (0.35% NaCl), and 8.5 (0.5% NaCl) references. Additionally, a warmup chip sample (full salt, intensity =6) was presented at the start of each session. Samples were served in randomized order and evaluated in duplicate over two sessions. There was a 2-minute break between samples and water and unsalted crackers were used as palate cleansers. Data was collected using Compusense cloud software (Compusense Inc., Guelph, Ontario).

### Data Analysis

Data were analyzed using three-way ANOVA (sample, panelist, replicate and interactions) followed by Tukey's HSD (α = 0.05) using Statistix 10 Software.

**Table 7**

| **Mean Saltiness Intensity Rating for Chip Samples** | |
|---|---|
| **Topical Coating Sample Composition (Per Kg Potato Chips)¹** | **Mean Saltiness Intensity** |
| Full Salt | 6.1a |
| 20% reduced Salt (12.3 g NaCl) + GAX (0.44 mg) and KA (1.57 mg) | 5.7a |
| 20% reduced Salt (12.3 g NaCl) | 5.0b |
| 40% reduced Salt (9.2 g NaCl) + GAX (0.44 mg) and KA (1.57 mg) | 4.8b |
| 40% reduced Salt 9.2 g NaCl) | 4.0c |

| | |
|---|---|
| ¹ = *Gentisic acid 5-O-β-D xylopyranoside (GAX), Kukoamine A (KA)* | |

Different letters indicate a significant difference (P < 0.05) according to Tukey's HSD. Critical value for comparison = 0.61; panelist = 9 in duplicate.

The Rep and all interactions were not significant indicating the panel was reproducible and displayed good concept alignment.

### Recommended Evaluation Protocol for PepsiCo

1. Two grams of each sample was weighed 1oz cups with lids. Cups/lips were included with the samples.
2. Before sample evaluation, panelists were familiarized with the full and reduced salt chips. Extra full and reduced salt samples were provided for this purpose. The salt perception had a temporal profile that could vary from person to person, therefore the evaluation protocol below must be followed to minimize this variation.
3. Evaluation protocol: The entire 2 g sample was placed in the mouth and chewed for 10 seconds or until the chip was completely masticated (paste-like), then the maximum salty intensity perceived was rated. Rinsed with water between samples.
4. Before evaluation of the samples, panelists were provided with a warmup chip sample (full salt).
5. FREC panel ratings were made on a 15-point line scale anchored with 2.5 (0.2% NaCl), 5 (0.35% NaCl), and 8.5 (0.5% NaCl) references. A full salt chip reference 6 was also provided to the panelists.

While the concepts of the present disclosure are susceptible to various modifications and alternative forms, it should be understood, however, that there is no intent to limit the concepts of the present disclosure to the particular disclosed forms; the intention is to cover all modifications, equivalents, and alternatives falling within the spirit and scope of the disclosure as defined by the claims.

Aspects of the disclosure are also set out in the following set of numbered clauses, in which is described:
Clause 1. A seasoning composition having enhanced salt intensity comprising a salt component and a sodium-free saltiness-perception enhancing compound that comprises at least one of gentisic acid 5-*O*-β-D xylopyranoside or kukoamine A, wherein the seasoning composition exhibits a mean saltiness intensity that is about the same as a second seasoning compound that has an amount of the salt component that is greater than the salt component in the seasoning composition and that does not contain the saltiness-perception enhancing compound.
Clause 2. The seasoning composition of clause 1 wherein the second seasoning compound has an amount of the salt component that is from 5 wt% to 67 wt% greater than the salt component in the seasoning composition.
Clause 3. The seasoning composition of any preceding clause comprising about 99.941 wt% to 99.9965 wt% of the salt component and from about 0.0035 wt% to 0.059 wt% of the saltiness-perception enhancing compound.
Clause 4. The seasoning composition of any preceding clause, wherein the saltiness-perception enhancing compound is derived from *Solanum tuberosum.*
Clause 5. The seasoning composition of any preceding clause, wherein the saltiness-perception enhancing compound is derived from an individual of the species *Solanum tuberosum* that comprises a modified level of the saltiness-perception enhancing compound relative to a wild-type individual of the same taxon.
Clause 6. A seasoned food product comprising: a food product; and a seasoning composition that includes a sodium-free saltiness-perception enhancing compound comprising at least one of gentisic acid 5-O-β-D xylopyranoside or kukoamine A, wherein the saltiness-perception enhancing compound enhances a salt intensity of the seasoned food product.
Clause 7. The seasoned food product of clause 6, wherein the saltiness-perception enhancing compound is derived from *Solanum tuberosum.*
Clause 8. The seasoned food product of clause 6 or 7, wherein the food product comprises a potato-based product.
Clause 9. The seasoned food product of clause 6, 7, or 8 wherein the food product comprises a liquid food product.
Clause 10. The seasoned food product of clause 6, 7, 8, or 9 wherein the saltiness-perception enhancing compound is derived from an individual of the species *Solanum tuberosum* that comprises a modified level of the saltiness-perception enhancing compound relative to a wild-type individual of the same taxon.
Clause 11. The seasoned food product of clause 6, 7, 8, 9 or 10, wherein the seasoned food product exhibits a mean saltiness intensity that is about the same as a second seasoned food product that has an amount of the salt component that is greater than the salt component in the seasoning composition and that does not contain the saltiness-perception enhancing compound.
Clause 12. A method of reducing sodium intake by using at least one of gentisic acid 5-O-β-D xylopyranoside or kukoamine A, comprising providing a composition that comprises a food product, a salt component, and a sodium-free saltiness-perception enhancing compound comprising the at least one of gentisic acid 5-O-β-D xylopyranoside or kukoamine A, wherein the saltiness-perception enhancing compound enhances the salt taste of the food product.
Clause 13. The method of clause 12, wherein the saltiness-perception enhancing compound is derived from *Solanum tuberosum.*
Clause 14. The method of clause 12 or 13, wherein the food product comprises a potato-based product.
Clause 15. The method of clause 12, 13 or 14, wherein the food product comprises a liquid food product.
Clause 16. The method of clause 12, 13, 14, or 15, wherein the saltiness-perception enhancing compound is derived from an individual of the species *Solanum tuberosum* that comprises a modified level of the saltiness-perception enhancing compound relative to a wild-type individual of the same taxon.
Clause 17. The method of clause 12, 13, 14, 15, or 16, wherein a quantity of the food product comprises about 5 wt% to about 40 wt% less sodium chloride than an equal quantity of a conventional food product of the same type.
Clause 18. The method of clause 12, 13, 14, 15, 16, or 17, wherein a quantity of the food product has a substantially similar salt taste as an equal quantity of the conventional food product of the same type that does not include the composition.
Clause 19. The method of clause 12, 13, 14, 15, 16, 17, or 18, wherein providing the composition comprises providing the composition instead of the conventional food product of the same type.
Clause 20. A method of enhancing the salt taste of a food product comprising providing the food product and applying a sodium-free saltiness-perception enhancing compound comprising at least one of gentisic acid 5-O-β-D xylopyranoside or kukoamine A to the food product, wherein the saltiness-perception enhancing compound enhances the salt taste of the food product.
Clause 21. The method of clause 20, wherein the saltiness-perception enhancing compound is derived from *Solanum tuberosum.*
Clause 22. The method of clause 20 or 21, wherein the food product comprises a potato-based product.
Clause 23. The method of clause 20, 21, or 22, wherein the food product comprises a liquid food product.
Clause 24. The method of clause 20, 21, 22, or 23 wherein the saltiness-perception enhancing compound is derived from an individual of the species *Solanum tuberosum* that comprises a modified level of the saltiness-perception enhancing compound relative to a wild-type individual of the same taxon.
Clause 25. The method of clause 20, 21, 22, 23 or 24 wherein a quantity of the food product comprises about 5 wt% to about 40 wt% less sodium chloride than an equal quantity of a conventional food product of the same type.
Clause 26. The method of clause 20, 21, 22, 23, 24, or 25, wherein a quantity of the food product exhibits a mean saltiness intensity that is about the same as the equal quantity of the conventional food product of the same type.
Clause 27. A seasoning composition providing enhanced salt intensity to a food product comprising a salt component and a saltiness-perception enhancing compound that comprises at least one of gentisic acid 5-O-β-D xylopyranoside or kukoamine A, wherein the seasoning composition exhibits a mean saltiness intensity that is greater than a second seasoning compound that has an amount of the salt component that is the same as the salt component in the seasoning composition and that does not contain the saltiness-perception enhancing compound.
Clause 28. The seasoning composition of clause 27, wherein the saltiness-perception enhancing compound is derived from *Solanum tuberosum.*
Clause 29. The seasoning composition of clause 27 or 28, wherein the saltiness-perception enhancing compound is derived from an individual of the species Solanum tuberosum that comprises a modified level of the saltiness-perception enhancing compound relative to a wild-type individual of the same taxon.

Also provided are the following technology aspects:
1. A seasoning composition having enhanced salt intensity comprising a salt component and a sodium-free saltiness-perception enhancing compound that comprises at least one of gentisic acid 5-*O*-β-D xylopyranoside or kukoamine A, wherein the seasoning composition exhibits a mean saltiness intensity that is about the same as a second seasoning compound that has an amount of the salt component that is greater than the salt component in the seasoning composition and that does not contain the saltiness-perception enhancing compound.
2. The seasoning composition of aspect 1 wherein the second seasoning compound has an amount of the salt component that is from 5 wt% to 67 wt% greater than the salt component in the seasoning composition.
3. The seasoning composition of any proceeding aspect comprising about 99.941 wt% to 99.9965 wt% of the salt component and from about 0.0035 wt% to 0.059 wt% of the saltiness-perception enhancing compound.
4. The seasoning composition of any proceeding aspect, wherein the saltiness-perception enhancing compound is derived from *Solanum tuberosum.*
5. The seasoning composition of any proceeding aspect, wherein the saltiness-perception enhancing compound is derived from an individual of the species *Solanum tuberosum* that comprises a modified level of the saltiness-perception enhancing compound relative to a wild-type individual of the same taxon.
6. A seasoned food product comprising:
   a food product; and
   a seasoning composition that includes a sodium-free saltiness-perception enhancing compound comprising at least one of gentisic acid 5-*O*-β-D xylopyranoside or kukoamine A,
   wherein the saltiness-perception enhancing compound enhances a salt intensity of the seasoned food product.
7. The seasoned food product of aspect 6, wherein the saltiness-perception enhancing compound is derived from *Solanum tuberosum.*
8. The seasoned food product of aspect 6 or 7, wherein the food product comprises a potato-based product.
9. The seasoned food product of any of aspect 6-8, wherein the food product comprises a liquid food product.
10. The seasoned food product of any of aspect 6-9, wherein the saltiness-perception enhancing compound is derived from an individual of the species *Solanum tuberosum* that comprises a modified level of the saltiness-perception enhancing compound relative to a wild-type individual of the same taxon.
11. The seasoned food product of any of aspect 6 - 10, wherein the seasoned food product exhibits a mean saltiness intensity that is about the same as a second seasoned food product that has an amount of the salt component that is greater than the salt component in the seasoning composition and that does not contain the saltiness-perception enhancing compound.
12. A method of reducing sodium intake by using at least one of gentisic acid 5-*O-*β-D xylopyranoside or kukoamine A, comprising providing a composition that comprises a food product, a salt component, and a sodium-free saltiness-perception enhancing compound comprising the at least one of gentisic acid 5-*O*-β-D xylopyranoside or kukoamine A, wherein the saltiness-perception enhancing compound enhances the salt taste of the food product.
13. The method of aspect 12, wherein the saltiness-perception enhancing compound is derived from *Solanum tuberosum.*
14. The method of aspects 12 or 13, wherein the food product comprises a potato-based product.
15. The method of any of aspects 12 - 14, wherein the food product comprises a liquid food product.
16. The method of any of aspects 12 - 15, wherein the saltiness-perception enhancing compound is derived from an individual of the species *Solanum tuberosum* that comprises a modified level of the saltiness-perception enhancing compound relative to a wild-type individual of the same taxon.
17. The method of any of aspects 12 - 16, wherein a quantity of the food product comprises about 5 wt% to about 40 wt% less sodium chloride than an equal quantity of a conventional food product of the same type.
18. The method of any of aspects 12 - 17, wherein a quantity of the food product has a substantially similar salt taste as an equal quantity of the conventional food product of the same type that does not include the composition.
19. The method of any of aspects 12 - 18, wherein providing the composition comprises providing the composition instead of the conventional food product of the same type.
20. A method of enhancing the salt taste of a food product comprising providing the food product and applying a sodium-free saltiness-perception enhancing compound comprising at least one of gentisic acid 5-*O*-β-D xylopyranoside or kukoamine A to the food product, wherein the saltiness-perception enhancing compound enhances the salt taste of the food product.
21. The method of aspect 20, wherein the saltiness-perception enhancing compound is derived from *Solanum tuberosum.*
22. The method of aspects 20 or 21, wherein the food product comprises a potato-based product.
23. The method of any of aspects 20 - 22, wherein the food product comprises a liquid food product.
24. The method of any of aspects 20 - 23, wherein the saltiness-perception enhancing compound is derived from an individual of the species *Solanum tuberosum* that comprises a modified level of the saltiness-perception enhancing compound relative to a wild-type individual of the same taxon.
25. The method of aspects 20 - 24, wherein a quantity of the food product comprises about 5 wt% to about 40 wt% less sodium chloride than an equal quantity of a conventional food product of the same type.
26. The method of aspects 20 - 25, wherein a quantity of the food product exhibits a mean saltiness intensity that is about the same as the equal quantity of the conventional food product of the same type.
27. A seasoning composition providing enhanced salt intensity to a food product comprising a salt component and a saltiness-perception enhancing compound that comprises at least one of gentisic acid 5-*O*-β-D xylopyranoside or kukoamine A, wherein the seasoning composition exhibits a mean saltiness intensity that is greater than a second seasoning compound that has an amount of the salt component that is the same as the salt component in the seasoning composition and that does not contain the saltiness-perception enhancing compound.
28. The seasoning composition of aspect 27, wherein the saltiness-perception enhancing compound is derived from *Solanum tuberosum.*
29. The seasoning composition of any of aspects 27 - 28, wherein the saltiness-perception enhancing compound is derived from an individual of the species *Solanum tuberosum* that comprises a modified level of the saltiness-perception enhancing compound relative to a wild-type individual of the same taxon.

## Claims

1. A seasoning composition having enhanced salt intensity, comprising a salt component and a sodium-free saltiness-perception enhancing compound that comprises kukoamine A, wherein the seasoning composition exhibits a mean saltiness intensity that is about the same as a second seasoning compound that has an amount of the salt component that is greater than the salt component in the seasoning composition and that does not contain the saltiness-perception enhancing compound,
wherein the saltiness-perception enhancing compound is derived from *Solanum tuberosum.*

2. The seasoning composition of claim 1, comprising about 99.941 wt% to 99.9965 wt% of the salt component and from about 0.0035 wt% to 0.059 wt% of the saltiness-perception enhancing compound.

3. The seasoning composition of claim 1 or claim 2, wherein the second seasoning compound has an amount of the salt component that is from 5 wt% to 67 wt% greater than the salt component in the seasoning composition; optionally from about 5 wt% to about 40 wt% greater than the salt component in the seasoning composition.

4. A seasoning composition providing enhanced salt intensity to a food product comprising a salt component and a saltiness-perception enhancing compound that comprises kukoamine A, wherein the seasoning composition exhibits a mean saltiness intensity that is greater than a second seasoning compound that has an amount of the salt component that is the same as the salt component in the seasoning composition and that does not contain the saltiness-perception enhancing compound,
wherein the saltiness-perception enhancing compound is derived from *Solanum tuberosum.*

5. The seasoning composition of any preceding claim, wherein the saltiness-perception enhancing compound is derived from an individual of the species *Solanum tuberosum* that comprises a modified level of the saltiness-perception enhancing compound relative to a wild-type individual of the same taxon.

6. A seasoned food product comprising:
a food product; and
a seasoning composition that includes a sodium-free saltiness-perception enhancing compound comprising kukoamine A,
wherein the saltiness-perception enhancing compound enhances a salt intensity of the seasoned food product,
wherein the saltiness-perception enhancing compound is derived from *Solanum tuberosum.*

7. The seasoned food product of claim 6, wherein a quantity of the food product comprises about 5 wt% to about 40 wt% less sodium chloride than an equal quantity of a conventional food product of the same type.

8. The seasoned food product composition of claim 6 or 7, comprising about 99.941 wt% to 99.9965 wt% of the salt component and from about 0.0035 wt% to 0.059 wt% of the saltiness-perception enhancing compound.

9. The seasoned food product of any one of claims 6-8, wherein the food product comprises (i) a potato-based product; and/or (ii) a liquid food product.

10. The seasoned food product of any one of claims 6- 9, wherein the saltiness-perception enhancing compound is derived from an individual of the species *Solanum tuberosum* that comprises a modified level of the saltiness-perception enhancing compound relative to a wild-type individual of the same taxon.

11. The seasoned food product of any one of claims 6 - 10, wherein the seasoned food product exhibits a mean saltiness intensity that is about the same as a second seasoned food product that has an amount of the salt component that is greater than the salt component in the seasoning composition and that does not contain the saltiness-perception enhancing compound.

12. A method of reducing sodium intake by using kukoamine A, comprising providing a composition that comprises a food product, a salt component, and a sodium-free saltiness-perception enhancing compound comprising the kukoamine A, wherein the saltiness-perception enhancing compound enhances the salt taste of the food product, wherein the saltiness-perception enhancing compound is derived from *Solanum tuberosum.*

13. The method of claim 12, wherein a quantity of the food product has a substantially similar salt taste as an equal quantity of the conventional food product of the same type that does not include the composition.

14. The method of claim 12 or claim 13, wherein providing the composition comprises providing the composition instead of the conventional food product of the same type.

15. A method of enhancing the salt taste of a food product, comprising providing the food product and applying a sodium-free saltiness-perception enhancing compound comprising kukoamine A to the food product, wherein the saltiness-perception enhancing compound enhances the salt taste of the food product, wherein the saltiness-perception enhancing compound is derived from *Solanum tuberosum.*

16. The method of claim 15, wherein a quantity of the food product exhibits a mean saltiness intensity that is about the same as the equal quantity of the conventional food product of the same type.

17. The method of any one of claims 12-16, wherein a quantity of the food product comprises about 5 wt% to about 40 wt% less sodium chloride than an equal quantity of a conventional food product of the same type.

18. The method of any one of claims 12-17, comprising about 99.941 wt% to 99.9965 wt% of the salt component and from about 0.0035 wt% to 0.059 wt% of the saltiness-perception enhancing compound.

19. The method of any one of claims 12-18, wherein the food product comprises: (i) a potato-based product; and/or (ii) a liquid food product.

20. The method of any one of claims 12-19, wherein the saltiness-perception enhancing compound is derived from an individual of the species *Solanum tuberosum* that comprises a modified level of the saltiness-perception enhancing compound relative to a wild-type individual of the same taxon.
